# EUROPEAN PATENT SPECIFICATION

(11) **EP 1 315 425 B1**
(45) Date of publication and mention of the grant of the patent: **15.06.2005**
(21) Application number: 01976179.0
(22) Date of filing: 29.08.2001
(51) Int. Cl.: A23L 1/212, A23L 3/48, A23B 7/028, A23P 1/02

(54) **PROCESS FOR PRODUCING TOMATO FLAKES**
VERFAHREN ZUR HERSTELLUNG VON TOMATENFLOCKEN
PROCEDE DE PRODUCTION DE COPEAUX DE TOMATE

(30) Priority: 07.09.2000 DE 10044244
(43) Date of publication of application: 04.06.2003
(73) Proprietor: Bestfoods, Englewood Cliffs NJ 07632 (US); Bestfoods Deutschland GmbH & Co. OHG, 74074 Heilbronn (DE)
(72) Inventor: KLUKOWSKI,Horst Bestfoods Deutschland GmbH &Co.OHG, 74074 Heilbronn (DE)
(74) Representative: Wurfbain, Gilles L.
(86) International application number: PCT/EP2001/010105
(87) International publication number: WO 2002/019841

(56) References cited:
- EP-A- 1 051 917
- GB-A- 2 032 242
- US-A- 3 082 541
- US-A- 4 504 504
- US-A- 4 810 517
- US-A- 5 869 122

## Description

The invention relates to a process for producing tomato flakes that are stable to cooking. Tomato flakes are taken to mean a semi-manufactured product made of dried tomato pieces. Tomato flakes are required for the production of soups, vegetable mixtures and other prepared dishes. In aqueous suspension they give a tomato pulp, a product that is in paste/piece form. It is essential for the consistency of a tomato pulp, which also determines the organoleptic impression, that the tomato flakes remain in semi-solid form even during cooking. Producing such tomato flakes that are stable to cooking from which, by suspension in an aqueous medium, tomato pulp that is stable to cooking may be produced, is a problem.

EP 1 051 917-A2, unpublished at the priority date of the present invention, describes a process for producing dry products which can be reconstituted with cold and hot aqueous liquids to give fruit pulps and vegetable pulps, by roller-drying fruit concentrates and vegetable concentrates containing foreign starch, the flakes obtained by comminution after roller drying being agglomerated using fruit concentrates and vegetable concentrates and the resultant agglomerate being subjected to a heat-moisture treatment. Such a heat-moisture treatment makes it possible to produce flakes and agglomerates that are stable to cooking, but care must be taken during each heat treatment that there is no discoloration or caramelization of the product. The present invention avoids this risk.

The present invention relates to a process for producing tomato flakes that are stable to cooking by roller-drying an aqueous suspension containing tomato concentrate and foreign starch, the flakes obtained by comminution after roller-drying being dried, if appropriate to the desired final water content. According to the invention the suspension is to contain a pectin or sodium alginate and, after the roller- drying, the flakes are treated with an aqueous solution containing calcium ions, preferably a CaCl₂ solution. The pectin or sodium alginate must be added to the suspension if the starting material does not contain, or does not contain sufficient, pectin or sodium alginate.

Pectins and alginates are used generally in food technology as solidifying agents. It is known that their gel properties can be intensified by calcium ions. Thus US patent 4163805 describes a process for producing a reconstituted food product in particular semi-solid pieces of green pepper, in which an aqueous suspension of finely divided green pepper is brought into piece form together with an alginate binder and calcium ions with the conjoint use of a monosaccharide or disaccharide, so that olives can be stuffed with the reconstituted paprika pieces of standard shape.

US patent 4504504 describes a process for preserving the natural texture of diced pectin-containing fresh fruit products or vegetable products by impregnation with an aqueous polyuronic-acid-containing solution and subsequent treatment of the impregnated product with a cation of a divalent metal to effect gelation.

US patent 4504502 describes coating a food product with an alginate, with the conjoint use of calcium ions for protection against moisture.

EP 884 002 A2 describes a process for increasing the consistency of plant products in piece form, in particular diced tomatoes, by treatment with a calcium-complexing mixture containing the enzyme pectinmethylesterase and a calcium salt at elevated temperatures of 60-100°C. In this process, pectin present naturally is demethylated by the enzyme.

US 4,810,517 discloses a dry food product which is reconstitutable with an aqueous liquid to form a pulpy textured sauce, soup, juice, compote and concasse. Such product is prepared by combining dry fruit or vegetable with leguminous pre-gelatinised cold swelling starch followed by roller-drying and crushing the so-dried film to produce flakes.

GB 2032242 discloses dehydrated edible products. Such products are prepared by drying compositions comprising finely divided foodstuffs dispersed in edible gel substantially free of aeration. The gels can be produced by mixing solid calcium sulphate particles rapidly throughout gellable aqueous alginate or low-methoxy pectate sols and gel under shear-free conditions.

This and similar prior art does not indicate how the problem of achieving a pulpy form that is stable to cooking can be achieved with tomato products.

The starting material used is a suitable tomato concentrate, for example three-fold concentrated tomato puree.

Suitable pectins are in particular customary apple pectins, and suitable alginates are, for example, the sodium salts of alginic acid.

The foreign starch used is in particular potato starch. The foreign starch is expediently used in an amount of 10-60% by weight, based on the dry matter of the suspension. However, other starches can be used, such as maize starch, rice starch, wheat starch or tapioca starch.

An aqueous suspension is first produced from the tomato concentrate, the foreign starch and the pectin or alginate. The water content of the suspension is generally 50-75% by weight, preferably 58-68% by weight.

The amount of added pectin or sodium alginate is generally 0.3-5% by weight, preferably 0.5-3% by weight, based on dry matter.

The suspension is subjected to roller-drying, for example at a temperature of 120-160°C. The dry film removed from the roller is comminuted and treated before or after the comminution with an aqueous solution containing calcium ions. Expediently, the flakes removed from the roller are agglomerated in a cutter or agglomerator with a solution containing calcium ions, preferably a CaCl₂ solution.

Expediently, a 0.1-10% strength CaCl₂ solution is used, with the amount of CaCl₂ being set such that it makes up 3-50% by weight, preferably 10-30% by weight, of the amount of pectin or alginate.

Preferably, in addition, a fruit acid, for example citric acid, is added to the suspension.

The starting material used can be a "hot-break" tomato puree, which, in contrast to "cold-break" tomato puree still contains functional pectin. ("Hot-break" denotes a tomato puree in which the pectinase has been inactivated by heat treatment and which therefore still has a high content of functional pectin. In contrast thereto, "cold break" tomato puree, owing to the remaining pectinase activity, contains no pectin, or contains only a small amount of pectin). As a result, the amount of pectin or sodium alginate to be added can be reduced or dispensed with completely.

By agglomerating such flakes with a CaCl₂ solution, an agglomerate that is still more stable to cooking is obtained than when cold-break tomato puree is used.

The inventively produced tomato flakes that are stable to cooking can be converted into a tomato pulp substitute by suspension in an aqueous medium.

### Example

A suspension is produced from the following constituents:

| | Amount used | DM basis |
|---|---|---|
| Tomato puree, 3-tuply concentrated | 200.00 kg | 76.0 kg |
| Potato starch | 100.00 kg | 80.0 kg |
| Na alginate or apple pectin | 2.00 kg | 2.0 kg |
| Citric acid | 1.70 kg | 1.7 kg |
| Water | 135.00 kg | |
| Total 1 | 438.00 kg | 159.7 kg |

The suspension is roller-dried at a roller temperature of 140°C and the dry film removed from the roller is agglomerated in a "Seydelmann Cutter" with addition of a 1% strength aqueous CaCl₂ solution.

| | Amount used | DM basis |
|---|---|---|
| Dried tomato flakes | 1000.0 g | 980.0 g |
| CaCl₂ solution 1% strength | 300.0 g | 3.0 g |
| Total 2 | 1300.0 g | 983.0 g |
| (DM = dry matter) | | |

The agglomerate is gently further dried to a moisture content of 4% by weight at a product temperature of 65°C.

## Claims

1. Process for producing tomato flakes that are stable to cooking by roller-drying an aqueous suspension containing tomato concentrate and foreign starch, wherein the suspension contains pectin or sodium alginate and, after the roller-drying, the flakes are treated with an aqueous solution containing calcium ions.

2. Process according to Claim 1, **characterized in that** the flakes obtained by comminution after roller- drying are dried to the desired final water content.

3. Process according to Claim 1 or 2, **characterized in that** the suspension contains 0.3-5% by weight, preferably 0.5-3% by weight, pectin or sodium alginate based on dry matter.

4. Process according to one of the preceding claims, **characterized in that** the flakes are treated, after the roller-drying, with a 0.1-10% strength CaCl₂ solution, the amount of CaCl₂ making up 3-50% by weight, preferably 10-30% by weight, of the amount of pectin or alginate.

5. Process according to one of the preceding claims, **characterized in that** the flakes removed from the roller are agglomerated in a cutter or agglomerator with an aqueous solution containing calcium ions.

6. Process according to one of the preceding claims, **characterized in that**, in addition, a fruit acid is added to the suspension.

7. Process according to one of the preceding claims, **characterized in that**, to produce the starting suspension, a tomato puree is used that still contains functional pectin.

8. Process according to one of the preceding claims, **characterized in that** the foreign starch used is potato starch.

9. Process according to one of the preceding claims, **characterized in that** the foreign starch is added to the suspension in an amount of 10-60% by weight, based on dry matter.

## Patentansprüche

1. Verfahren zur Herstellung von Tomatenflocken, die gegenüber dem Kochen stabil sind, durch Filmtrocknen einer wässerigen Suspension, enthaltend Tomatenkonzentrat und Fremdstärke, wobei die Suspension Pektin oder Natriumalginat enthält, und wobei die Flocken nach der Filmtrocknung mit einer wässerigen Lösung, die Calciumionen enthält, behandelt werden.

2. Verfahren nach Anspruch 1, **dadurch gekennzeichnet, dass** die durch Zerkleinerung erhaltenen Flocken nach der Filmtrocknung auf den erwünschten Wasserendgehalt getrocknet werden.

3. Verfahren nach Anspruch 1 oder 2, **dadurch gekennzeichnet, dass** die Suspension 0,3-5 Gew.-%, vorzugsweise 0,5-3 Gew.-%, Pektin oder Natriumalginat, bezogen auf die Trockenmasse, enthält.

4. Verfahren nach einem der vorhergehenden Ansprüche, **dadurch gekennzeichnet, dass** die Flocken nach der Filmtrocknung mit einer Lösung von 0,1-10% CaCl₂ behandelt werden, wobei die Menge des CaCl₂ 3-50 Gew.-%, vorzugsweise 10-30 Gew.-%, der Menge des Pektins oder Alginats beträgt.

5. Verfahren nach einem der vorhergehenden Ansprüche, **dadurch gekennzeichnet, dass** die aus der Trommel entfernten Flocken in einem Schneidegerät oder Agglomerationsgerät mit einer wässerigen Lösung, die Calciumionen enthält, agglomeriert werden.

6. Verfahren nach einem der vorhergehenden Ansprüche, **dadurch gekennzeichnet, dass** zusätzlich eine Fruchtsäure zu der Suspension gegeben wird.

7. Verfahren nach einem der vorhergehenden Ansprüche, **dadurch gekennzeichnet, dass** zur Herstellung der Ausgangssuspension ein Tomatenpüree verwendet wird, das noch funktionelles Pektin enthält.

8. Verfahren nach einem der vorhergehenden Ansprüche, **dadurch gekennzeichnet, dass** die verwendete Fremdstärke Kartoffelstärke ist.

9. Verfahren nach einem der vorhergehenden Ansprüche, **dadurch gekennzeichnet, dass** die Fremdstärke zu der Suspension in einer Menge von 10-60 Gew.-%, bezogen auf die Trockenmasse, gegeben wird.

## Revendications

1. Procédé de production de flocons de tomate qui sont stables pour la cuisson par séchage sur cylindre d'une suspension aqueuse contenant du concentré de tomate et un amidon étranger, dans lequel la suspension contient de la pectine ou de l'alginate de sodium et, après le séchage sur cylindre, les flocons sont traités avec une solution aqueuse contenant des ions calcium.

2. Procédé selon la revendication 1, **caractérisé en ce que** les flocons obtenus par comminution après séchage sur cylindre sont séchés jusqu'à obtention de la teneur finale en eau désirée.

3. Procédé selon la revendication 1 ou 2, **caractérisé en ce que** la suspension contient 0,3 à 5% en poids, de préférence 0,5 à 3% en poids, de pectine ou d'alginate de sodium sur la base de la matière sèche.

4. Procédé selon l'une quelconque des revendications précédentes, **caractérisé en ce que** les flocons sont traités, après le séchage sur cylindre, avec une solution de CaCl₂ de force 0,1 à 10%, la quantité de CaCl₂ constituant 3 à 50% en poids, de préférence 10 à 30% en poids, de la quantité de pectine ou d'alginate.

5. Procédé selon l'une quelconque des revendications précédentes, **caractérisé en ce que** les flocons enlevés du cylindre sont agglomérés dans une découpeuse ou un agglomérateur avec une solution aqueuse contenant des ions calcium.

6. Procédé selon l'une quelconque des revendications précédentes, **caractérisée en ce que**, en sus, un acide de fruit est ajouté à la suspension.

7. Procédé selon l'une quelconque des revendications précédentes, **caractérisé en ce que**, pour produire la suspension de départ, une purée de tomate qui contient encore de la pectine fonctionnelle est utilisée.

8. Procédé selon l'une quelconque des revendications précédentes, **caractérisé en ce que** l'amidon étranger utilisé est de l'amidon de pomme de terre.

9. Procédé selon l'une quelconque des revendications précédentes, **caractérisé en ce que** l'amidon étranger est ajouté à la suspension dans une quantité de 10 à 60% en poids, sur la base de la matière sèche.
